Europäisches Patentamt

(19) European Patent Office

Office européen des brevets

(11) Publication number: **0 300 786**
**A2**

# (12) EUROPEAN PATENT APPLICATION

(21) Application number: **88306698.7**

(22) Date of filing: **21.07.88**

(51) Int. Cl.⁴: **A 61 J 11/04**
**A 61 J 9/00**

(30) Priority: **22.07.87 GB 8717332**

(43) Date of publication of application:
**25.01.89 Bulletin 89/04**

(84) Designated Contracting States: **AT DE ES FR IT**

(71) Applicant: **AVENT MEDICAL LIMITED**
**Prince's Building 22nd Floor**
**Hong Kong (HK)**

(72) Inventor: **Ford, Donald Robert**
**1 Barton Grove, Rectory Road**
**Kedington, Suffolk (GB)**

(74) Representative: **Woodward, John Calvin et al**
**VENNER SHIPLEY & CO. 368 City Road**
**London EC1V 2QA (GB)**

(54) Combined one-piece feeding teat and cap and method of manufacture thereof.

(57) A one-piece combined feeding teat and cap assembly in which the mouthpiece(2) is moulded from a flexible material such as thermoplastic rubber and attached to the cap 3 which is moulded from a different rigid material such as polyproylene. The cap (3) can either make a snap fit or a screw fit onto a container (10). A method of manufacturing the one-piece combined feeding teat and cap of the invention is also disclosed.

FIG.1.

## Description

## COMBINED ONE-PIECE FEEDING TEAT AND CAP AND METHOD OF MANUFACTURE THEREOF

This invention relates to a combined one-piece feeding teat and cap.

Feeding teats are generally manufactured as a separate item and attached to the feeding bottle by means of a screw cap. For hygiene reasons, disposable feeding bottles are becoming more popular, particularly as modern manufacturing techniques enable the manufacturing costs to be kept very low.

Another requirement of a one trip/disposable feeding bottle is that it has to have the minimum number of parts and also it should be easy to assemble. With this objective in mind, the invention seeks to minimise the number of parts of a feeding bottle to a combined feeding teat and cap which fits onto a disposable container for the food or milk to be dispersed. Both parts of the assembly should be readily disposable and easy to manufacture.

According to one aspect of the invention there is provided a one-piece combined feeding teat and cap comprising a mouthpiece moulded from a flexible material which is attached to the cap moulded from a different substantially rigid material, the cap having a central aperture therein to which the mouthpiece is fitted and attachment means for releasably fitting the cap to an open ended container, the cap having an upstanding collar around the central aperture to which the base of the mouthpiece is fusably attached.

The attachment means may comprise a screw thread provided on the cap but it can also take the form of an annular bead provided on the under surface of the cap, the bead being spaced radially inwardly of the outer perimeter of the cap, the inside face of the bottom of the cap having an annular inwardly directed bead thereon adapted to locate in an annular groove adjacent the upper edge of the container to which the combined teat and cap is to be fitted.

Preferably, the mouthpiece is fused to the collar during manufacture but could be glued to it if desired. Conveniently, it is fused to the outer surface of the collar which, in a preferred embodiment, has an outer surface which is inclined with respect to its inner surface so that the upper edge of the collar is tapered or bevelled in cross section.

The combined teat and cap can be fitted to any suitable container. For instance, if the cap has the inwardly directed bead around its bottom edge, then the container would have an annular groove adjacent its upper edge adapted to receive and locate the inwardly directed bead therein. In order to ensure that the bead makes a good seal with the groove, the annular groove can be provided at the bottom of a downwardly depending skirt extending from the upper edge of the container. With this arrangement, the cap preferably also includes an annular bead formed on its under surface radially inwardly of the outer perimeter of the cap. This bead serves to form a channel in the under surface of the cap which receives the upper edge of the container to which the teat/cap combination is to be fitted. To facilitate nesting of the container, it is preferably frusto-conical in shape.

The combined cap/teat of the present invention can also be fitted to a container moulded in concertina form from a plastics or waxed paper material so that it can be collapsed for storage purposes but extended, in use, to increase its volume.

According to another aspect of the invention there is provided a method of moulding a combined one-piece teat and cap comprising the steps of:

a) moulding the cap from a substantially rigid plastics material,

b) moving the moulded cap from the mould and inserting it into a second mould where the teat is moulded from a second flexible material and simultaneoulsy attached to the cap due to the contact adhesion of the teat material with the cap material.

Preferably, the cap is moulded with a central hole in it having an upstanding collar around its perimeter, the teat being attached to this collar during moulding thereof due to said contact adhesion.

To facilitate transfer of the moulded cap from its mould and into the mould where the teat is formed, the die for the cap preferably has a portion shaped to correspond to the internal dimensions of the teat.

For ease of manufacture, conveniently the die is removed with the moulded cap thereon and it is then rotated through 180 ° before it is inserted into another mould where the teat is moulded and attached to the cap.

The teat and cap may be moulded from any suitable material but preferably the cap is moulded from polypropylene and the teat is moulded from a thermoplastic rubber material due to the good contact adhesion properties between the two materials.

Several embodiments of the invention will now be described, together with a preferred method of manufacture thereof, with reference to the accompanying drawings in which:

Figure 1 shows a combined teat and cap of the present invention fitted to one form of container;

Figure 2 is an enlarged view of the combined teat and cap shown in Figure 1;

Figure 3 is a view of an alternative combined teat and cap fitted to a collapsable container;

Figure 4 is a view of the arrangement shown in Figure 3 but with the container shown in its collapsed condition;

Figure 5 is an enlarged view of the combined teat and cap shown in Figures 3 and 4; and

Figures 6A-6C show a preferred method of manufacturing the combined teat and cap shown in Figures 3-5.

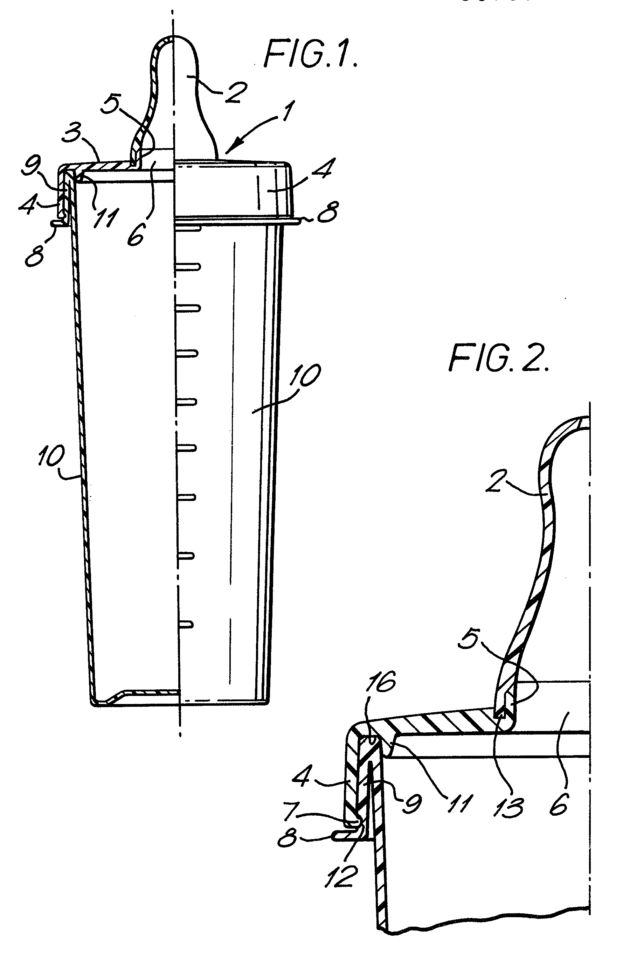

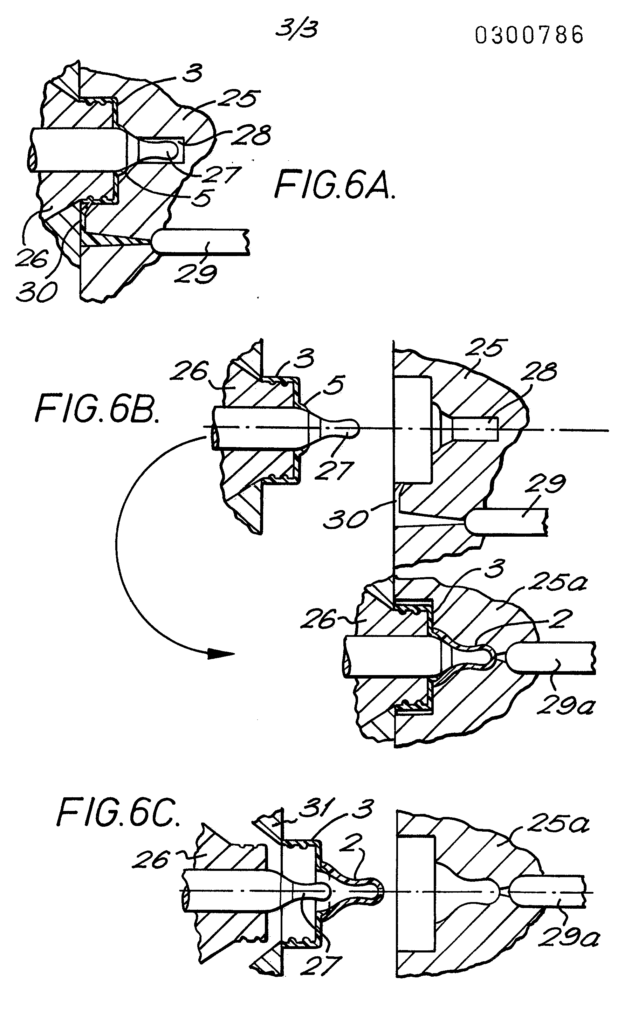

Referring now to Figures 1 and 2 of the drawings, there is shown a combined teat and cap assembly 1 mounted on a disposable container 10. The teat/cap comprises a thermoplastic rubber mouthpiece 2 whose base is irremovably attached to an upwardly extending collar 5 formed around a central hole 6 in a cap 3. An annular recess 13 (see Fig. 2) is provided around the outside of the base of the collar 5 and is adapted to receive the bottom of the teat 2 during manufacture, whereby the teat is fusably joined to the collar 5 by contact adhesion in a manner to be described in more detail hereafter with reference to Figures 6A-6C. The cap has a downwardly extending annular wall 4 provided at its bottom edge with an inwardly directed bead 7 (see Figure 2). The undersurface of the cap 3 is also formed with a downwardly extending 11 lip which is spaced slightly inwardly of the inner surface of the wall 4 to provide a channel 13 into which the upper edge of the container 10 can fit.

The container 10 can be made from any suitable relatively rigid material, such as polypropylene and it is generally tapered in cross section to facilitate nesting thereof. The upper edge of the container 10 has a downwardly extending skirt 9, the bottom of which is formed with an annular groove 12 adapted to receive the inwardly directed bead 7 on the cap 3. A flange 8 extends radially outwardly from the skirt 9 just below the annular groove 12.

The construction of the combined teat and cap 1 and the container 10 is such that the cap can be snap-fitted on to the top of the container 10 and retained thereon due to the bead 7 on the cap seating in the annular groove 12. When in this position, the lip 11 on the undersurface of the cap 3 makes a seal against the upper edge of the container 10 to prevent the contents thereof from leaking out of the container.

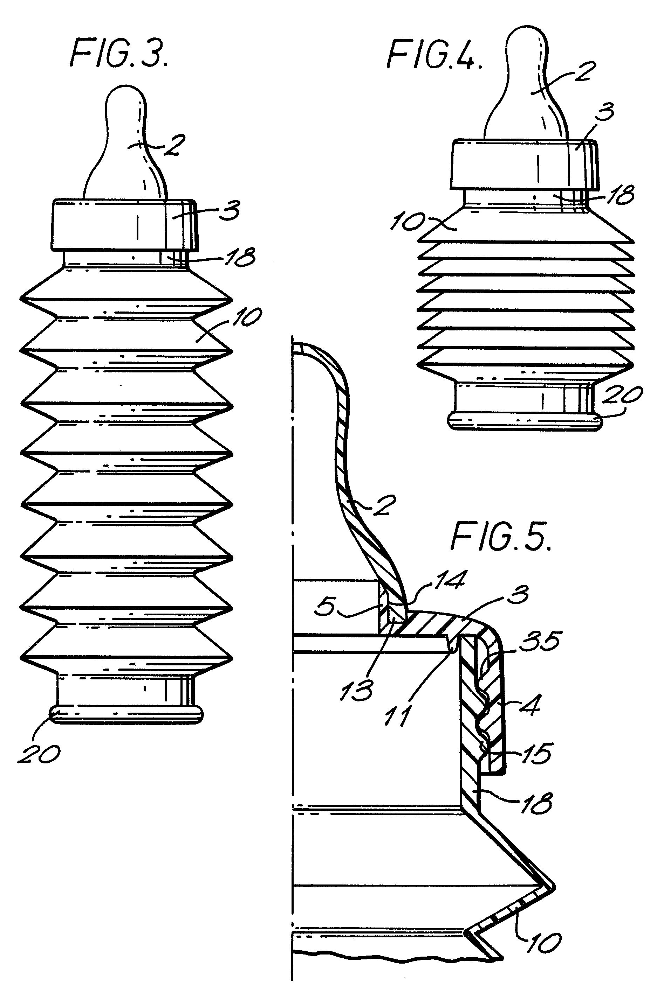

Referring now to the embodiment shown in Figures 3 -5, in these Figures the same reference numerals have been used to identify parts which are the same as or very similar to those shown in the embodiment of Figures 1 and 2. As with the embodiment of Figures 1 and 2, the assembly comprises a combined teat and cap having a mouthpiece 2 whose base is irremovably attached to an upstanding collar 5 (see Fig. 5) formed round the central hole in the cap 3. An annular groove or recess 13 is also formed around the base of the collar 5 to receive the base of the teat 2 which is fusably attached to the collar 5 by contact adhesion during manufacture, for instance by the method to be described referring to Figures 6A-6C. The difference between this embodiment and that shown in Figures 1 and 2 is that the downwardly depending wall 4 of the cap is formed internally with screw threads 35. These are adapted to cooperate with corresponding threads 15 on a neck 18 of the container 10. Also, the upper edge of the collar collar 5 is generally bevelled in cross section at 14 to provide an inclined surface generally parallel to the inside surface of the teat attached thereto and thereby facilitating bonding with the mouthpiece 2 whereby a generally smooth inner surface is provided in the mouthpiece in this region. As can be seen from Figure 5, the bonding takes place over the area of the inner surface of the groove 13 and the outer surface of the collar 5 including the bevelled part 14.

The container 10 is particularly novel in that it is moulded from a polypropylene or polyethylene plastics material configured so as to be collapsable. Its collapsed condition for storage purposes is shown in Figure 4.

A large annular bead 20 is provided at the base of the container which can be pulled by a user to extend or erect the bottle 10 from its closed/collapsed condition shown in Figure 4 to its extended/erect condition shown in Figure 3.

The bottle body 10 can be moulded from a clear material, in which case the contents thereof can be readily seen. However, if it is moulded from an opaque material, a clear strip (not shown) may be provided along its length so that the level of milk therein can be seen.

It will be appreciated from the foregoing that the embodiments just described provide a very effective disposable feeding bottle which is simple in construction and cheap to manufacture.

The invention also provides a novel method of manufacturing the combined teat and cap assembly just described with reference to Figures 1 and 2 and Figures 3 - 5. A preferred moulding sequence is illustrated in Figures 6A-6C.

Figure 6A show the cap 3 being moulded. Figure 6B shows the moulded cap being removed from its mould following which it is rotated through 180] and inserted into a second mould where the teat is formed and attached to the cap 3. Figure 6C shows the removal of the finished product from the mould.

The actual moulding sequence and the apparatus involved therewith will now be described in more detail.

Referring to Figure 6A there is shown a mould 25 in which the cap 3 is formed. A die 26 is inserted into the mould cavity and has an end 27 protruding from the front thereof which is shaped to the exact internal dimensions of the teat 2 which will eventually be attached to the cap 3. This shaped end 27 is housed in a bore 28 in the mould 25. The cavity between the die end 27 and the internal surface of the cavity 28 does not get filled with moulding material. As can be seen from Figure 6A, when the moulding material, preferably polypropylene, is injected into the mould through the barrel 29, it flows through the passageway 30 into the mould and forms the screw cap 3 with its collar 5.

On completion of this part of the moulding cycle, the die 26 is withdrawn from the mould 25 on a first opening and the die 26 is then moved to align itself with a second mould 25a shaped to mould the teat 2. The mould parts are closed so that the die 26 is inserted into the mould 25a. Material suitable to mould the teat 2 is then injected through barrel 29a into the mould cavity. The preferred material is thermoplastic rubber and this not only fills the cavity in the mould 25a to form the teat 2 but the material also makes contact adhesion with he collar 5 on the recently moulded cap 3 also located in the mould. When this moulding process is complete, the mould parts are separated for a second opening and as the mould opens, the cap 3 with the teat 2 moulded thereon is removed from the die 26 by means of ejector pins 30. The cycle is then complete and can be repeated by returning to the position shown in Figure 6A.

With this manufacturing technique, it is possible to manufacture a teat/cap unit which requires no assembly, without the disadvantages of using only one material to make it one-piece. The teat is required to be elastomeric and the cap has to be made of a relatively solid material to retain the unit on a plastic or glass bottle. The invention uses the melt properties of the two preferred materials used, ie thermoplastic rubber for the teat 2 and polypropylene for the cap 3. When polypropylene is moulded and thermoplastic rubber is introduced into the mould (see Figure 6B), the "contact adhesion" which results is sufficient to withstand the pulling forces which will be exerted on the teat 2 by a baby during feeding but this is not sufficient to separate the teat 2 from the collar 5 on the screw cap 3.

The moulding barrels can either be arranged one above the other as illustrated in the drawings or alternatively they can be arranged side-by-side whichever is found to be most convenient. With such an arrangement, full automatic production can be achieved.

## Claims

1. A one-piece combined feeding teat and cap comprising a mouthpiece moulded from a flexible material which is attached to the cap moulded from a different substantially rigid material, the cap having a central aperture therein to which the mouthpiece is fitted and attachment means for releasably fitting the cap to an open ended container, characterised in that the cap (3) is provided with an upstanding collar (5) around the central aperture (6) to which the base of the mouthpiece is fusably attached.

2. A cap/teat as claimed in claim 1 characterised in that the base of the mouthpiece is fused to the outer surface of the collar.

3. A cap/teat as claimed in claim 1 or claim 2 characterised in that the outer surface of the collar is generally parallel to the inner surface thereof.

4. A cap/teat as claimed in claim 1 or claim 2 characterised in that the outer surface of the collar is inclined with respect to its inner surface whereby the collar is tapered in cross-section.

5. A cap/teat as claimed in any one of the preceding claims characterised in that the interior surfaces of the teat adjacent the collar, the collar itself and central aperture in the cap are substantially coplanar.

6. A cap/teat as claimed in any one of the preceding claims characterised in that the attachment means comprises a screw thread (35) provided on said cap.

7. A cap/teat as claimed in any one of the preceding claims characterised in that the cap (3) is moulded from polypropylene and the mouthpiece is moulded from a thermoplastic rubber material.

8. A cap/teat as claimed in any one of the preceding claims when fitted to a container (10) made of a plastics or waxed paper material in concertina form so that it can be collapsed for storage purposes.

9. A method of moulding a one-piece combined teat and cap assembly characterised by the steps of :

(a) moulding the cap from a substantially rigid plastics material;

(b) removing the cap from the mould and inserting it into a second mould where the teat is then moulded from a different flexible material and simultaneously attached to the cap due to the contact adhesion of the flexible material of the teat with the substantially rigid material of the cap.

10. A method as claimed in claim 9 wherein the cap is moulded with a central hole having an upstanding collar thereon, the teat being attached to this collar during moulding due to said contact adhesion.

11. A method as claimed in claim 9 or claim 10 wherein the cap is moulded on a die having a portion which extends forwardly thereof dimensioned to the internal dimensions of the teat.

12. A method as claimed in claim 11 wherein the die is removed with the moulded cap thereon and it is then rotated through 180° before it is inserted into another mould where the teat is moulded and attached to the cap.

0300786

FIG.1.

FIG.2.

FIG.3.

FIG.4.

FIG.5.

FIG.6A.

FIG.6B.

FIG.6C.